# EUROPEAN PATENT APPLICATION

(11) **EP 2 339 427 A2**
(43) Date of publication of application: **29.06.2011**
(21) Application number: 10196830.3
(22) Date of filing: 23.12.2010
(51) Int. Cl.: G06F 1/16, G06F 3/01

(54) **Method and apparatus for generating vibrations in portable terminal**

(30) Priority: 24.12.2009 KR 20090131263
(71) Applicant: Samsung Electronics Co., Ltd., Suwon-si, Gyeonggi-do 442-742 (KR)
(72) Inventor: Lee, Eun-Hwa, 442-742, Gyeonggi-do (KR); Bae, Yu-Dong, 442-742, Gyeonggi-do (KR); Lee, Jeong-Seok, 442-742, Gyeonggi-do (KR); Yun, In-Kuk, 442-742, Gyeonggi-do (KR); Seo, Seong-Min, 442-742, Gyeonggi-do (KR); Kim, Po-Ra, 442-742, Gyeonggi-do (KR)
(74) Representative: Jenkins, Richard Gavin

(57) **Abstract**

Control of vibrations generated in a portable terminal is disclosed. The vibration generating apparatus includes a plurality of vibrators mounted to the portable terminal to be spaced apart from each other by a predetermined interval and having different resonance frequencies; and a control unit configured to determine vibration generation patterns of the plurality of vibrators according to a vibration event and to drive the plurality of vibrators according to the vibration generation patterns.

## Description

### BACKGROUND OF THE INVENTION

### 1. Field of the Invention

The present invention relates generally to the control of vibrations generated in a portable terminal, and more particularly, to a method and an apparatus for generating vibrations that respond to a manipulation of a portable terminal by a user.

### 2. Description of the Related Art

As integrated circuit technologies are developed and the demands of consumers diverge, various portable terminals are being used. Portable terminals include, for example, mobile communication terminals such as a mobile phone, personal digital assistants (PDAs), portable digital multimedia broadcasting (DMB) terminals, MPEG layer 3 (MP3) players, portable multimedia players (PMPs), and portable gaming devices such as a Playstation Portable (PSP). While such portable terminals had been developed to provide their natural functions, they are gradually being developed to provide multiple functions. That is, a single portable terminal that can provide complex functions such as a mobile communication function, a game function, and a multimedia reproducing function.

Such a portable terminal includes a vibrator and drives the vibrator according to control of the operation of the terminal to generate vibrations for informing a user of information. For example, vibrations are often used to inform a user of the reception of a call or a message or are generated in response to a specific event of a game. When a portable terminal is used in public places, vibrations are often used instead of sounds to prevent noise from being generated.

In this way, using vibrations instead of a specific sound is not only advantageous in preventing generation of noise but also gives a user a sense of interactivity during a game because the user can directly and physically feel a response. Accordingly, a game pad or a game controller as well as a portable terminal includes a vibrator to appropriately generate vibrations during a game.

Vibrations may be applied to a touch screen of a portable terminal to realize a feeling of pushing a button having a vibration feedback.

A portable terminal including a touch screen uses vibrations to allow a user to check an input in order to prevent an input error through the touch screen. For example, a portable terminal generates a short vibration signal to allow a user to check a touch.

Meanwhile, a motor cannot stop vibrations immediately due to its characteristics and thus leaves residual vibrations. When a potable terminal includes an AC linear motor in order to improve them, the phase of a drive voltage is changed to generate a signal. On the other hand, when a portable terminal includes a DC motor, a reverse voltage is applied to it.

In addition, a portable terminal uses changes in the strength, duration, and pattern of a voltage applied to a motor to generate various haptic effects to enhance the sensations in various applications.

However, while an AC linear motor generates large vibrations in a specific resonance frequency, it has a limitation in creating haptic effects because its vibrations are limited to a fixed frequency. Meanwhile, while a DC motor can change its drive frequency in response to an applied voltage, the strength of vibrations becomes weak, causing a limitation in creating haptic effects in the case of a low frequency.

### SUMMARY OF THE INVENTION

Accordingly, the present invention has been made to solve the above-mentioned problems occurring in the prior art, and the present invention provides a method and an apparatus for generating vibrations that create various haptic effects.

The present invention also provides a method and an apparatus for generating vibrations that increase satisfaction in the use of a portable terminal.

The present invention further provides a method and an apparatus for generating vibrations that reflect an interactive input of a user.

In accordance with an aspect of the present invention, there is provided a vibration generating apparatus for a portable terminal including a plurality of vibrators mounted to the portable terminal to be spaced apart from each other by a predetermined interval and having different resonance frequencies; and a control unit configured to determine vibration generation patterns of the plurality of vibrators according to a vibration event and to drive the plurality of vibrators according to the vibration generation patterns.

### BRIEF DESCRIPTION OF THE DRAWINGS

The above and other aspects, features and advantages of the present invention will be more apparent from the following detailed description taken in conjunction with the accompanying drawings, in which:
FIG. 1 is a block diagram of a mobile communication terminal according to an embodiment of the present invention;
FIG. 2A illustrates a mobile communication terminal in which a plurality of vibrators are mounted according to the embodiment of the present invention;
FIGS. 2B and 2C illustrates distributions of vibration forces of a mobile communication terminal according to the embodiment of the present invention;
FIGS. 3A and 3B illustrates vibration force distribution data when a plurality of vibrators are mounted to realize senses of upward and downward directions;
FIG. 4 illustrates the operation of the mobile communication terminal according to the embodiment of the present invention; and
FIGS. 5A to 11 illustrates examples of generating vibrations according to various embodiments of the present invention.

### DETAILED DESCRIPTION OF EMBODIMENTS OF THE PRESENT INVENTION

Hereinafter, embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention unclear.

The present invention effectively provides varying feedback corresponding to an input of a user or a notification of certain information using vibrations in a portable terminal. Accordingly, a portable terminal includes a plurality of vibrators to generate vibrations in various patterns. The embodiment of the present invention includes two vibrators as an example. The resonance frequencies of the vibrators of the portable terminal are preferably different, and the vibrators are mounted to the portable terminal so as to be spaced apart from each other to generate vibrations in a single direction.

The vibrators of the portable terminal generate various patterns of vibrations when specific information is to be informed to a user, for example, when the reception of a call or an alarm is informed to the user. Further, the portable terminal generates feedback vibrations according to an input of the user through a touch screen such that the feedback vibrations are interactive to the input pattern of the user.

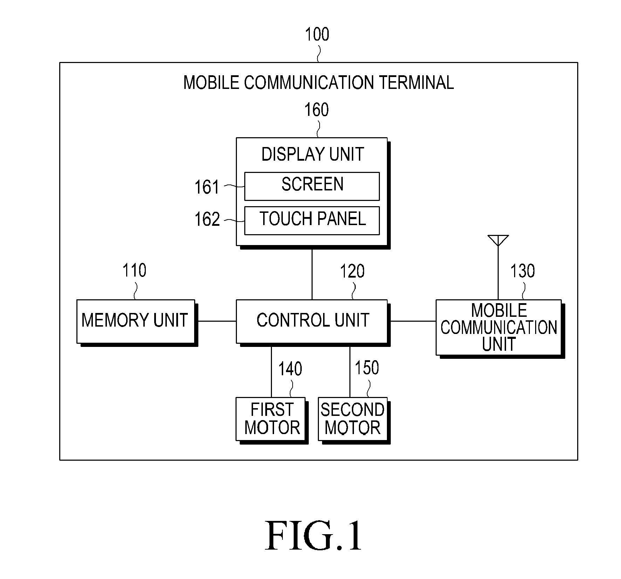

The configuration of the portable terminal to which the present invention is applied is shown in FIG. 1. A portable terminal is a small-sized terminal device that can be carried with one hand and to which an input can be made with it being held by one hand in motion, and includes, for example, a mobile communication terminal such as a mobile phone, a personal digital assistant (PDA), a portable digital multimedia broadcasting (DMB) terminal, an MPEG layer 3 (MP3) player, a portable multimedia player (PMP), and a portable gaming device such as a Playstation Portable (PSP).

FIG. 1 illustrates an example of a mobile communication terminal as a portable terminal which includes motors as vibrators. While FIG. 1 illustrates a mobile communication terminal, the configuration of the present invention may be applied to other types of portable terminals.

The mobile communication terminal 100 includes a memory unit 110, a control unit 120, a mobile communication unit 130, a plurality of motors 140 and 150, and a display unit 160.

The control unit 120 controls the overall operation of the mobile communication terminal 100.

The display unit 160 includes a touch screen, and thus includes a screen 161 and a touch panel 162 of the touch screen. The display unit 160 displays under the control of the control unit 120 various image information and data and images received from a base station or stored in the memory unit 110. The screen 161 may be a Liquid Crystal Display (LCD) which includes an LCD controller, a memory for storing display data, and an LCD display device.

The touch panel 162 is mounted to overlap the screen 161 in order to allow a user to perform a touch input while checking the data displayed on the screen 161. The touch panel 162 includes a touch detector and a signal converter. The touch detector detects a touch control instruction such as a touch, a drag, and a drop from a physical change, for example, of a resistance, an electrostatic capacity, etc. The signal converter coverts a physical change to a touch signal and outputs the touch signal to the control unit 120.

The mobile communication unit 130 performs operations and signal processing required for mobile communications under the control of the control unit 120. The mobile communication unit 130 transmits and receives wireless signals to and from a mobile communication base station through an antenna. The mobile communication unit 130 modulates a transmission signal input from the control unit 120 through a baseband processor to transmit the wireless signal through the antenna, and demodulates the wireless signal received through the antenna to provide the demodulated signal to the control unit 120 through the baseband processor. The baseband processor processes a baseband signal transmitted and received to and from the control unit 120.

The memory unit 110 stores programs for processing and control of the control unit 120, reference data, and various renewable stored data which are provided to a working memory of the control unit 120. The memory unit 110 stores various vibration control patterns according to an embodiment of the present invention. The vibration control patterns are drive control data for the vibrators which correspond to vibration generation patterns. The vibration generation pattern is one of the vibrations which are to be generated in the mobile communication terminal 100 and may be manifested by the strength of the vibrations and a combination of the location, interval, and maintenance period of the vibrations. Accordingly, a vibration control pattern may include a vibration strength, a motor drive period, and a drive interval.

Vibration control patterns and vibration generation patterns may be classified according to applications mounted in the mobile communication terminal 100, or may also be classified according to the types of user inputs or user input patterns. For example, a separate vibration generation pattern may correspond to notification events such as the reception of a call, the reception of a message, and an alarm, and thus, a separate vibration control pattern may correspond to the vibration generation pattern. As another example, different vibration generation patterns may be provided as touch feedbacks such that vibration control patterns corresponding to them are provided when a user makes a touch input through the touch panel 162 to input a phone number and makes a touch input to play a game.

The vibration generation pattern may be selected by a user and a vibration event corresponding to the vibration generation pattern may also be selected by the user. A vibration event is an event that causes the generation of a vibration and, for example, may indicate a notification event including the reception of a call, the reception of a message, and an alarm, a touch input, and the like.

Accordingly, the memory unit 110 stores vibration edit menu program data that allows a user to edit a vibration generation pattern and to designate a vibration event corresponding the vibration generation pattern. Upon request for a vibration edit menu by a user, the control unit 120 displays the vibration edit menu, and thus displays a user interface which allows a user to select the strength, location, interval, and maintenance period of vibrations and a vibration event. The control unit 120 stores a vibration control pattern corresponding to a vibration generation pattern of a user and a corresponding vibration event.

A first motor 140 and a second motor 150 are driven under the control of the control unit 120, and are spaced apart from each other in the mobile communication terminal 100. The resonance frequencies of the first motor 140 and the second motor 150 are preferably different to generate vibrations in various patterns. Vibrators capable of generating vibrations in a single direction may be used as the first motor 140 and the second motor 150 to generate vibrations in more various patterns according to the embodiment of the present invention. For example, the first motor 140 and the second motor 150 may be linear motors.

The vibration characteristics of a linear motor are simple since it generates vibrations along one axis. Due to such characteristics of a linear motor, if a linear motor that vibrates in a direction perpendicular to a front surface of the portable terminal, i.e. the z-axis direction is mounted to the portable terminal to be driven, vibration forces are distributed in a diagonal direction in the portable terminal.

Accordingly, a plurality of vibrators are preferably located such that when the first motor 140 and the second motor 150 which are linear motors are mounted to the mobile communication terminal, the directions of the vibrations generated by the motors are preferably in the same direction, i.e. one of left/right and one of upward/downward directions with respect to the front surface of the mobile communication terminal 100 or the x-axis direction and the y-axis direction, respectively.

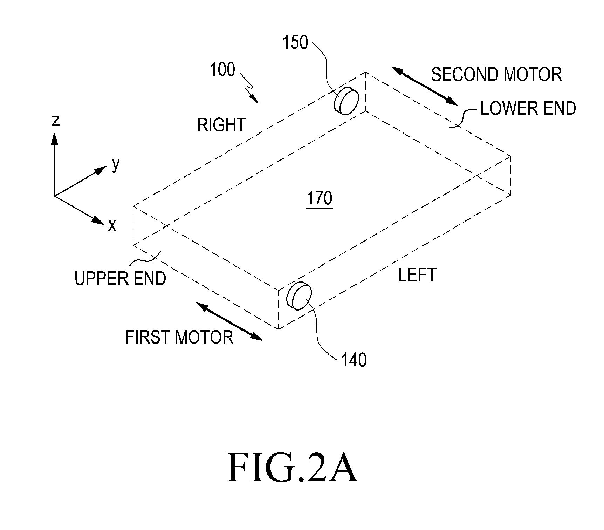

FIG. 2A illustrates a case in which the first motor 140 and the second motor 150 are mounted such that vibrations are generated in the left/right direction with respect to the front surface 170 of the mobile communication terminal 100, i.e. the x-axis direction according to the embodiment of the present invention. In FIG. 2A, the first motor 140 and the second motor 150 are diagonally located on surfaces of the mobile communication terminal 100 parallel to each other and are spaced a predetermined distance apart from each other. The vibration directions of the first and second motors 140 and 150 are in the same direction, i.e. the x-axis direction.

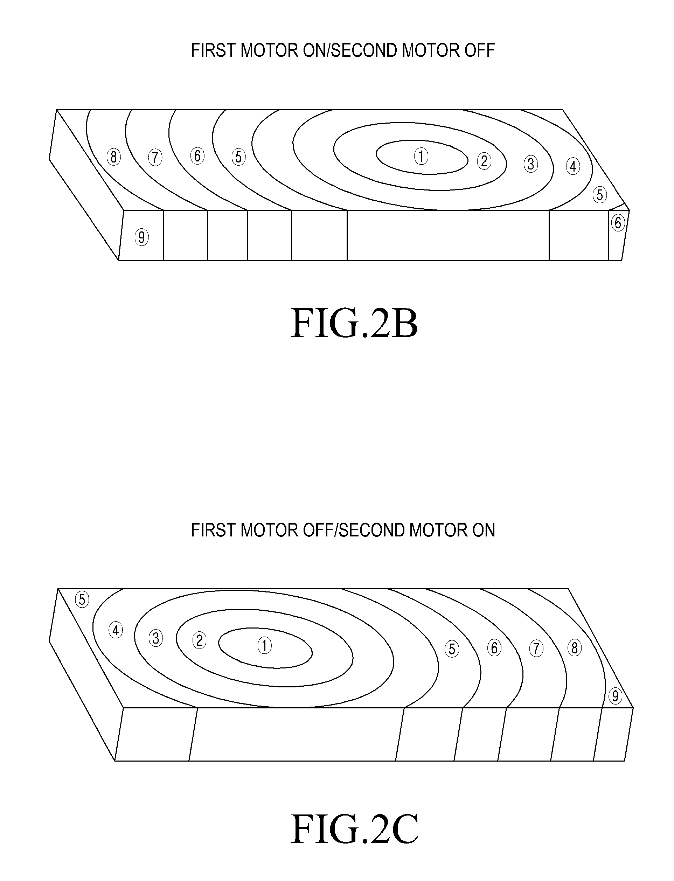

FIGS. 2B and 2C illustrate the distribution of vibration displacements by the motors 140 and 150 mounted as in FIG. 2A. FIG. 2B illustrates vibration displacements when only the first motor 140 is driven and FIG. 2C illustrates vibration displacements when only the second motor 150 is driven. In FIGS. 2B and 2C, the vibration displacement section ① illustrates a small displacement and the vibration displacement section ⑨ illustrates a large displacement. That is, it illustrates that a displacement become large toward a vibration displacement section ⑨.

Referring to FIGS. 2A to 2C, it can be seen that the strengths of vibrations are high along one direction of the upper or lower end of the front surface 170 and are low in the opposite direction. As the vibration forces are consistently distributed upward and downward in this way, the vibrations have directionality.

When the linear motors 140 and 150 are mounted to generate vibrations in a direction perpendicular to the front surface 170, i.e. the z-axis direction in a conventional way, a user cannot feel directionality as the distribution of vibration forces becomes weak in the diagonal direction and strong on the opposite side with respect to the front surface 170. On the other hand, when the linear motors 140 and 150 are mounted in a vibration direction parallel to the front surface 170, a constant distribution of vibration forces, which are strong in one direction and weak in another direction, is obtained to cause left/right and upward/downward directionality.

This method is not limited to linear motors, but can be applied to all vibrators capable of generating vibrations in a single direction. That is, if the direction of vibrations of a vibrator is parallel to the front surface 170, the vibrator will be operated in the same way as in the above example.

Further, since it can be seen from a simulation that when a rigid body whose width is smaller than its length vibrates, vibration forces become strongest if the rigid body vibrates in a shorter direction (parallel to the width of the rigid body). Thus, if vibrations are generated in a shorter direction, the directionality or movement of vibrations can be realized with low power consumption.

The directionality of vibrations means that when gripping a device, the user feels like vibrations are generated locally as relatively strong vibrations are generated at a specific portion of the device. The movement of vibrations means that vibrations are generated not only at a specific portion of a portable terminal but also they continuously move from one portion to another portion of the portable terminal.

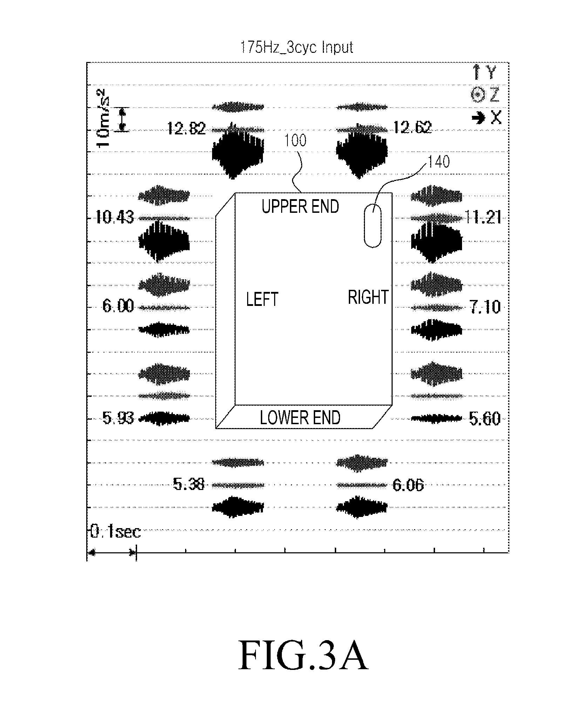

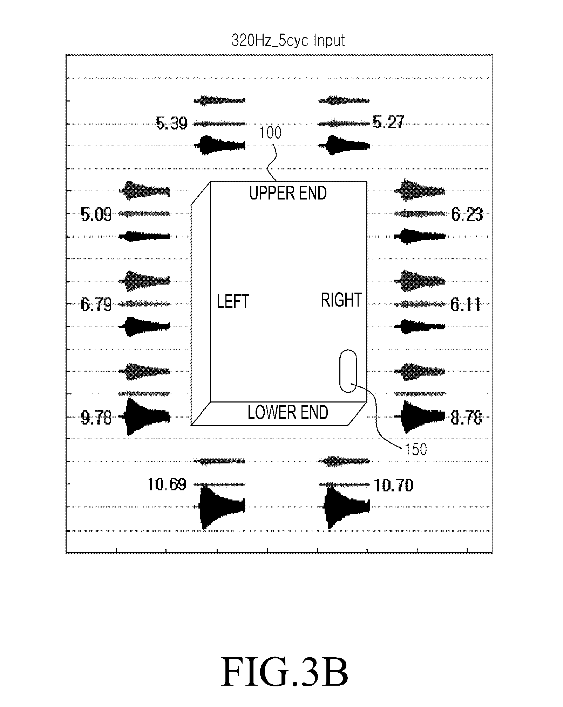

FIGS. 3A and 3B illustrate vibration force distribution data when the first motor 140 and the second motor 150 are mounted to simulate upward and downward directions. In the mobile communication terminal 100 of FIGS. 3A and 3B, the first motor 140 and the second motor 150 are mounted on the upper right side and lower left side of the front surface 170 and the direction of the vibration is the right/left direction, i.e. the x-axis direction with respect to the front surface 170.

FIG. 3A is a view illustrating vibration force distribution data (Voltage 6 Vpp, unit m/s2) when only the first motor 140 is driven in three cycles at 175 Hz, and FIG. 3B is a view illustrating vibration force distribution data when only the second motor 150 is driven in 5 cycles at 320 Hz.

The values in the figures represent total accelerations at each point of the mobile communication terminal 100, and each total acceleration is a root of the sum of the squares of the 3-axis acceleration values. Three waveform patterns corresponding to the total accelerations represent vibration patterns sequentially in the y-axis, z-axis, and x-axis when a sine wave is driven. The total accelerations are proportional to vibration forces and it can be seen from FIGS. 3A and 3B that as the vibrations are generated in the right/left direction, i.e. the x-axis direction, the difference between the vibrations at the upper and lower ends remains approximately 3 dB constantly due to the vibrations at the upper (or lower) end, and if vibrators are disposed at the upper and lower ends, directionality and movement can be realized.

If the vibrator is disposed in this way, vibrations become strong on one side and weak on the other side, a user can feel the right/left or upward/downward directionality when the vibrations are generated. Then, when a plurality of vibrators are driven at different times, the right/left or upward/downward movement can also be realized.

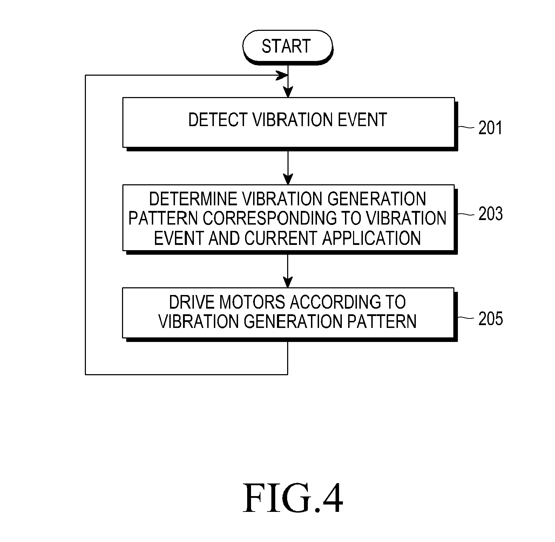

A process of controlling the generation of vibrations in the mobile communication terminal 100 according to an embodiment of the present invention will be described with reference to FIG. 4. FIG. 4 is a view illustrating a control process when a vibration event is generated according to the embodiment of the present invention.

If the control unit 120 detects the generation of a vibration event in step 201, a vibration generation pattern corresponding to the detected vibration event and the currently set application is detected in step 203. Vibrations are generated by driving the motors 140 and 150 according to a vibration control pattern in step 205.

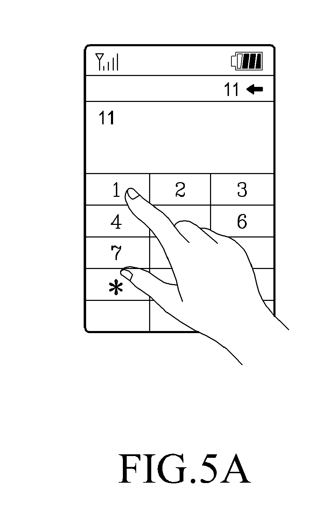

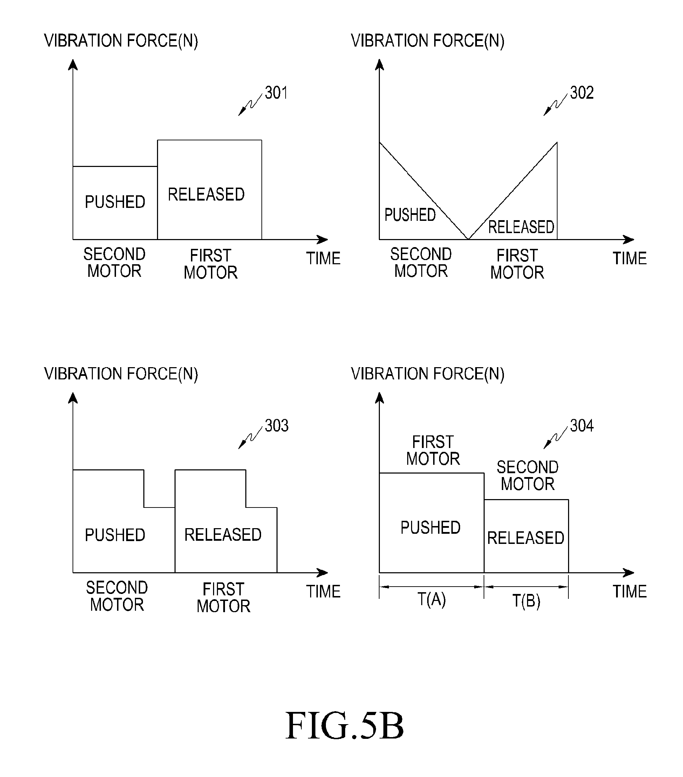

Examples of generating vibrations are illustrated in FIGS. 5 to 11.

FIG. 5A illustrates that a key button is displayed through a touch screen and an application for selecting the displayed key button through the touch screen is set according to the embodiment of the present invention. When a key button is selected through a touch screen, if a feedback vibration is generated to inform a user that a touch input of the user has been normally performed, the user can perform a touch input more conveniently and accurately.

The vibration generation pattern corresponding to such a key input vibration event may be formed such that the vibration generated when the touch panel 162 is touched to select a key button or a key is pushed and the vibration generated when the touch is released from the touch panel 162 are different. When two vibrators having different resonance frequencies, i.e. the first motor 140 and the second motor 150 are used according to the embodiment of the present invention, different motors may be respectively used when a key press is detected and a touch is released to form a vibration generation pattern. Accordingly, a button feeling of a user can be enhanced by allowing the user to feel different vibrations when the touch panel 162 is touched and when a touch is released.

FIG. 5B illustrates various vibration generation patterns for feedback vibrations of selection of key buttons. The first vibration generation pattern 301 is for the case in which the second motor 150 is driven for pressing of a key button and the first motor 140 is driven for releasing of the key button, in which case vibration force is stronger when the key button is released than when the key button is pressed. The second vibration generation pattern 302 is for the case in which the second motor 140 is driven by a predetermined magnitude of vibration force and vibration force is gradually reduced when a key button starts to be pushed and the vibration force of the first motor 140 gradually increases when the key button is released. The third vibration generation pattern 303 is for the case in which the second motor 150 maintains a predetermined magnitude of vibration force when a key button starts to be pushed and is driven to a weaker vibration force after the lapse of a predetermined time period, and the first motor 140 is driven in a similar way when the key button is released. The fourth vibration generation pattern 304 is for the case in which the first motor 140 maintains a predetermined magnitude of vibration force for a predetermined time period when a key button starts to be pushed and the second motor 150 is driven to a relatively small vibration force for a predetermined time period when a key button is released. The memory unit 110 stores vibration control patterns corresponding to various generation patterns and the control unit 120 controls the motors 140 and 150 according to the corresponding patterns.

Thus, the button feeling of a user can be enhanced by controlling two motors having different resonance frequencies to be driven when a key button is selected and when the key button is released, in which case the vibrations if the motors are controlled differently. The vibration generation patterns corresponding to the selection of key buttons may be include a variety of forms according to the selection of a user.

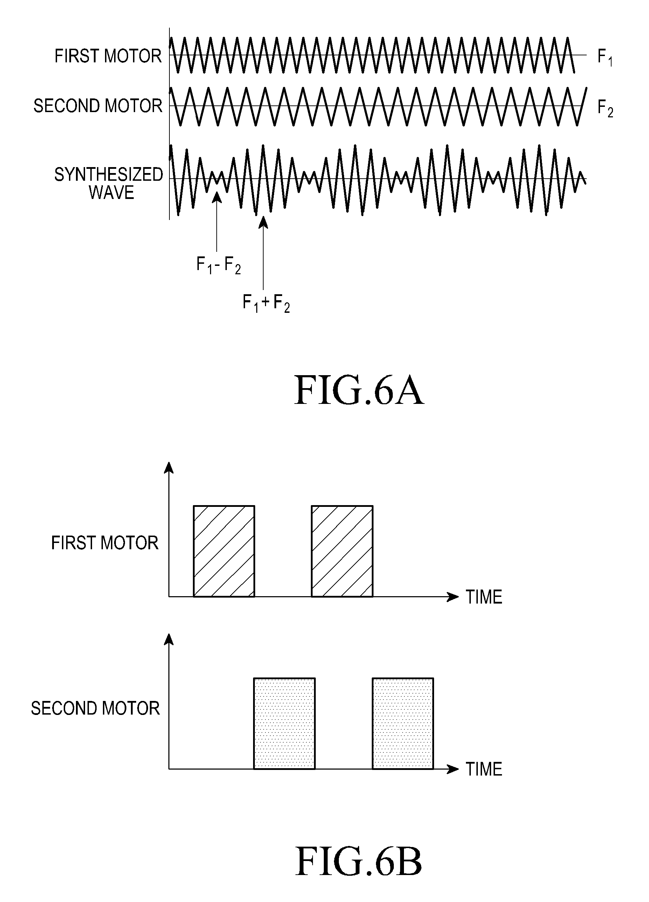

FIGS. 6A and 6B illustrate vibration generation patterns corresponding to a call receiving vibration event. FIG. 6A illustrates a vibration generation pattern of simultaneously driving the first motor 140 and the second motor 150 at different frequencies. For example, if the first motor 140 is driven at a frequency f1 and the second motor 150 is driven at a frequency f2, dynamic vibrations corresponding to synthesized waves f1+f2 or f1-f2 are generated, making it possible to effectively inform of the reception of a call.

FIG. 6B is a vibration generation pattern for the case of including the first motor 140 and the second motor 150 as in the embodiments of FIGS. 2 and 3 and is a pattern of alternately driving the motors. Thus, since a user feels like a vibration is generated at a specific location of the mobile communication terminal 100, i.e. an upper or lower portion of the mobile communication terminal 100, the mobile communication terminal 100 can effectively inform a user of the reception of a call.

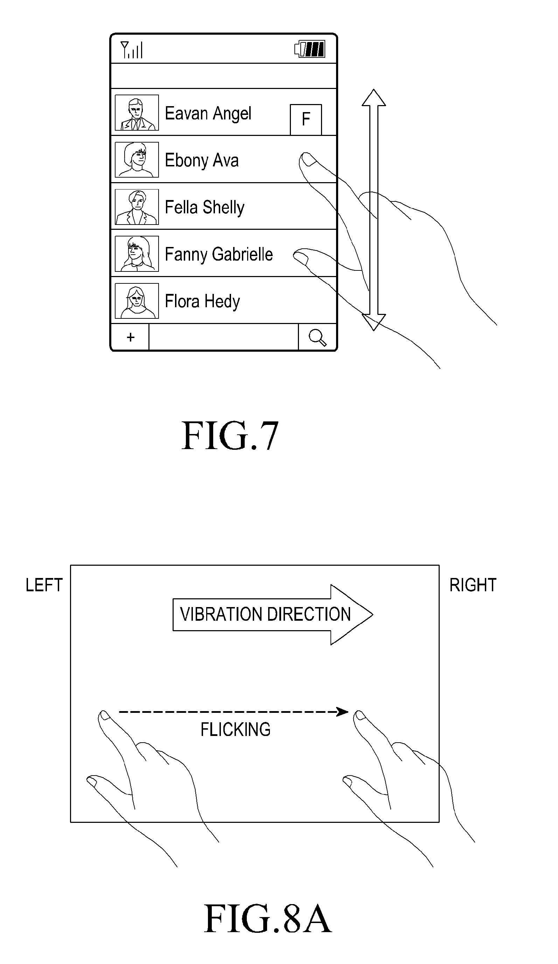

FIG. 7 illustrates an example of generating a feedback vibration for a scroll touch input when a large capacity of data are scrolled in an application such as a phone book. When a large capacity of data are scrolled, if a feedback vibration is provided to represent the direction of a scroll or how many data are scrolled, a user can intuitively recognize the direction of a scroll, the amount of scrolled data, and the amount of remaining data.

For example, when the scrolled data is a list including a plurality of items, a vibration generation pattern in which a vibration is generated at an intermediate point whenever the items are located at an intermediate point of the screen, a vibration is generated at an upper portion of the mobile communication terminal 100 with respect to the display direction of data when a list starts, and a vibration is generated at a lower portion of the mobile communication terminal 100 when a list ends. If vibrations are provided in this way, a user can intuitively know the amount of scroll data and in which direction the data has been scrolled. Vibrations may be generated locally by mounting the first motor 140 and the second motor 150 as in FIG. 2A.

As another example, the directionality of vibrations corresponding to the scroll direction may be provided with a vibration generation pattern by scrolling the data defined as an intermediate portion of the scrolled data and driving a motor having a high resonance frequency for a short time while the data are being displayed on the screen, by driving a motor capable of generating a strong vibration in the corresponding direction according to the scroll direction of the data such that the vibration force of the motor responds to the scroll speed, and by driving the remaining motor such that the vibration force of the remaining motor gradually becomes weak. In this case, only a motor corresponding to a starting portion or an ending portion of the scrolled data may be driven.

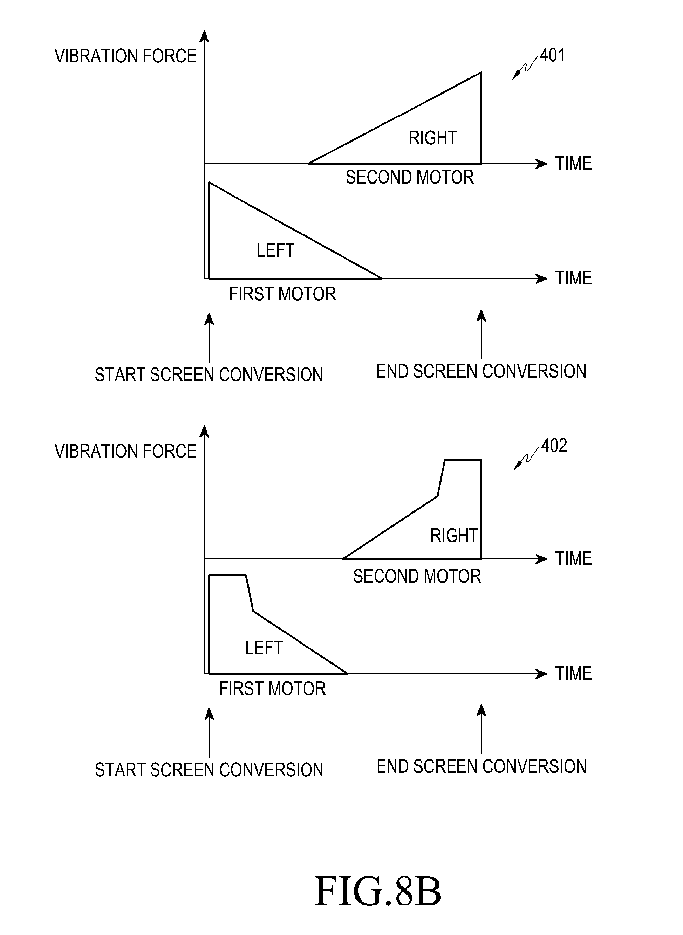

FIGS. 8A and 8B illustrate an example of a feedback vibration when a user checks data in a flicking manner. For example, when a plurality of images are checked with an image display application being executed, a user can touch the touch panel 162 as if the user sweeps the touch panel 162 from the left to the right or from the upper side to the lower side with an arbitrary image being displayed. Accordingly, the control unit 120 displays the arbitrary image as if the image is moved in the direction in which the flicking touch is generated, and displays the following image to change the screen.

A vibration generation pattern may be formed in response to the display change, an example of which is illustrated in FIG. 8B. FIG. 8B illustrates various vibration generation patterns when an image is flicked from the left to the right as in FIG. 8A, in which case it is assumed that the first motor 140 is located on the left side of the mobile communication terminal 100 with respect to displayed data and the second motor 150 is located on the right side.

Referring to FIG. 8B, the fifth vibration generation pattern 401 is such that after the first motor 140 is driven to generate a predetermined magnitude of vibration force when the screen starts to be converted, the vibration force is gradually reduced according to a screen converting speed, and after the second motor 150 is driven to have a vibration force which gradually increases from a minimum value, a strongest vibration force is driven at a screen conversion ending point, in order to make a user feel like a vibration is moved from the left to the right.

The sixth vibration generation pattern 402 is such that after the first motor 140 is driven to generate a predetermined magnitude of vibration force for a predetermined time period when a screen starts to be converted by a flicking touch, the vibration force is gradually reduced according to the screen converting speed, and after the second motor 150 is driven to generate a vibration force which gradually increases from the minimum value, the strongest vibration force is generated for a predetermined time period at a screen conversion ending point, in order to make a user feel like a vibration is moved from the left to the right.

The screen converting time may be fixed, but since it can be dynamically changed in correspondence to the length and speed of a flicking touch locus of a user, it may be reflected on the fifth vibration generation pattern 401 and the sixth vibration generation pattern 402 to adjust the entire vibration generation time period.

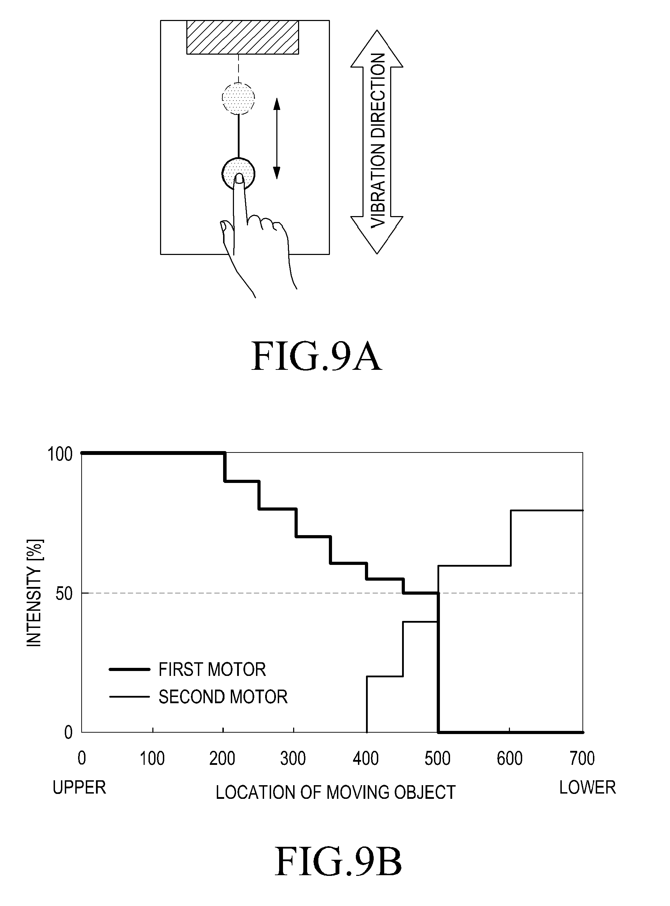

FIGS. 9A and 9B illustrate an example of providing a feedback vibration when a game application is executed to move an object displayed on a screen according to a touch input of a user. If a user selects an object through the touch panel 162 and moves an input means downward with the touch state being maintained as in FIG. 9A, the control unit 120 moves the object along a touch locus to display it. If the user releases the touch, the object is continuously displayed as if the object moves upward and downward. Then, the movement width of the object is gradually reduced as time lapses, and the object is stopped after a predetermined time period.

If a synchronized vibration were generated at a location of the object which is repeatedly moved upward and downward in a specific direction and the displacement of which is reduced to be stopped on a screen, a user could experience an enhanced feeling of reality during a game.

An example of a vibration generation pattern corresponding to the feedback vibration is illustrated in FIG. 9B. In order to generate a vibration synchronized with the location of a moving object, the vibration force, vibration intensity and vibration generation period are adjusted.

The vibration generation pattern according to the location change of an object may be dynamically changed. Since the movement display pattern of an object is determined in proportion to the time period of a touch input of a user for an object and a touch movement distance and the display location of an object according to the determined movement display pattern is determined, a vibration generation point corresponding to it may be determined and thus a vibration generation pattern is determined.

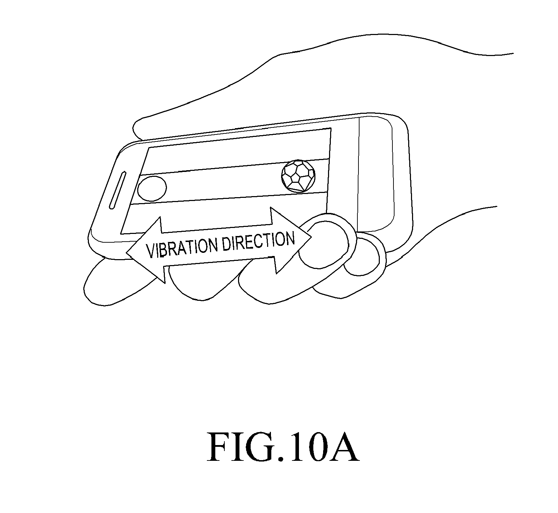

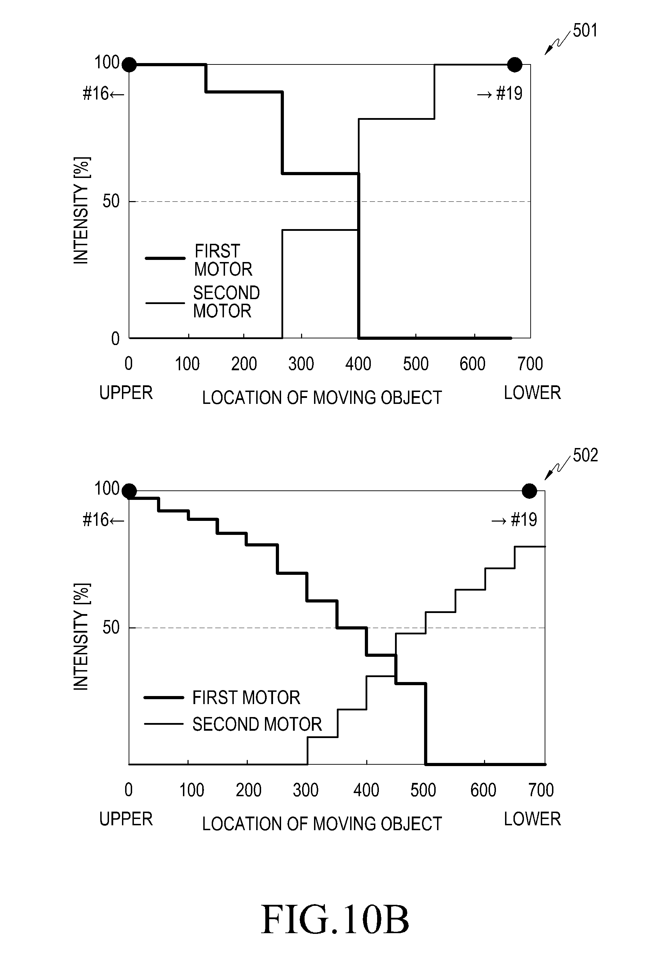

FIGS. 10A and 10B illustrate an example of generating a vibration feedback corresponding to a location of an object when an object displayed on a screen is moved according to a movement of the mobile communication terminal 100 to be displayed in another game application.

If a user shakes the mobile communication terminal 100 with a hand, the movement direction and movement speed of the mobile communication terminal 100 can be detected by an acceleration sensor or an angular velocity sensor of the mobile communication terminal 100. The control unit 120 reflects the detected movement direction and movement speed to continuously change the displayed state using the determined display location of the object. The vibration forces and vibration force maintaining times of the first motor 140 and the second motor 150 may be determined to generate vibrations corresponding to the determined location of the object.

The vibration generation pattern is illustrated in FIG. 10B. The seventh vibration generation pattern 501 is a pattern for the case in which an object is moved quickly, that is, the movement speed of the mobile communication terminal 100 is fast, and the eighth vibration generation pattern 502 is a pattern for the case in which the movement speed of the mobile communication terminal 100 is slow.

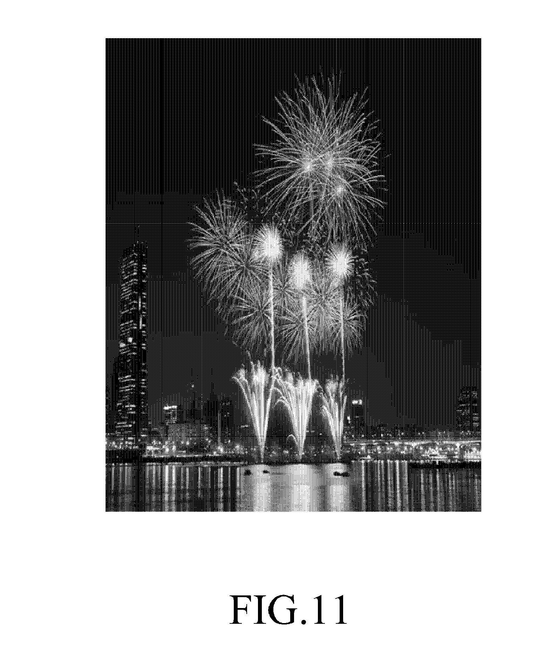

FIG. 11 illustrates an example of generating vibrations according to the frequencies of audio signals output during reproduction of a video. That is, a vibration corresponding to the audio signals output as the video is reproduced by defining a vibration generated in correspondence to the frequencies of the audio signals.

Accordingly, an audible frequency band is divided into a plurality of frequency bands, and the vibration forces and vibration force maintaining times of the first motor 140 and the second motor 150 are designated to generate different vibrations for each frequency band. For example, it can be defined that a motor having a high resonance frequency generates a short and strong vibration at a high frequency band, and a motor having a low resonance frequency generates a long and strong vibration at a low frequency band. It can be also defined that the two motors are simultaneously driven according to a frequency band. Such values may be stored in the memory unit 110.

The control unit 120 analyzes frequency components contained in the audio signals output as a video is reproduced and controls the first motor 140 and the second motor 150 to generate vibrations corresponding to a most frequently used frequency band.

As described above, the sense of reality and satisfaction of a user can be increased by generating various vibration patterns in correspondence to a user input or a notification event.

The present invention can generate various haptic effects in a portable terminal, increase the satisfaction and sense of reality of a user in relation to the portable terminal, and provide vibrations interactively reflecting a user input.

While the invention has been shown and described with reference to certain embodiments thereof, it will be understood by those skilled in the art that various changes in form and details may be made therein without departing from the spirit and scope of the invention as defined by the appended claims. For example, the embodiments described above can be applied to other types of mobile terminals as well as the mobile communication terminal 100. Further, not only a linear motor but also a piezo motor or an electric active motor may be used as the vibrator. Moreover, in order to enable a user to feel a sense of a rough and hard feeling or a sense of a light feeling, a linear motor operating in a relatively high frequency (250 ∼ 500 Hz) may be used. Therefore, the scope of the invention should not be defined by the description described above, but should be defined by the attached claims and equivalents thereof.

## Claims

1. A vibration generating apparatus for a portable terminal, comprising:
a plurality of vibrators mounted to the portable terminal to be spaced apart from each other by a predetermined interval and having different resonance frequencies; and
a control unit configured to determine vibration generation patterns of the plurality of vibrators according to a vibration event and to drive the plurality of vibrators according to the vibration generation patterns.

2. The vibration generating apparatus of claim 1, wherein the portable terminal further comprises a touch screen, and wherein the control unit drives the vibrator having a first resonance frequency at a time point when a touch input is generated if the vibration event is the touch input for a key button displayed through the touch screen of the portable terminal and drives the vibrator having a second resonance frequency at a time point when the touch input is released.

3. The vibration generating apparatus of claim 2, wherein the plurality of vibrators are driven to generate vibrations in a single vibration direction, wherein the single vibration direction is one of the upward/downward and right/left directions with respect to a front surface of the portable terminal, and wherein at least two of the plurality of vibrators are mounted at left and right ends of the portable terminal respectively, or are mounted at upper and lower ends of the portable terminal respectively.

4. The vibration generating apparatus of claim 3, wherein the control unit drives the plurality of vibrators to generate vibrations at locations corresponding to a direction in which a scroll touch for currently displayed data proceeds if the scroll touch is generated in the touch screen.

5. The vibration generating apparatus of claim 3, wherein if a flicking touch for currently displayed data is generated in the touch screen, the control unit drives the plurality of vibrators to generate vibrations in a direction in which the flicking touch proceeds by changing the display state of data to convert the screen in correspondence to the direction in which the flicking touch proceeds and by driving a first vibrator to generate vibrations in a direction corresponding to a location where the flicking touch starts at a time point when the screen conversion starts and driving a second vibrator to generate vibrations in a direction corresponding to a location where the flicking touch ends at a time point when the screen conversion ends.

6. The vibration generating apparatus of claim 5, wherein the control unit drives the first vibrator to generate a predetermined magnitude of vibration force when the screen conversion starts and then to gradually reduce the vibration force and drives the second vibrator to generate a minimum value of vibration force at a specific time point and gradually increase the vibration force and then to generate the predetermined magnitude of vibration force at a time point when the screen conversion ends.

7. The vibration generating apparatus of claim 3, wherein when a display location of an object is changed in correspondence to the touch input with the object being displayed on the touch screen, the control unit drives the plurality of vibrators to generate vibrations in a point corresponding to the location of the object.

8. The vibration generating apparatus of claim 3, wherein the portable terminal further comprises an acceleration sensor and an angular velocity sensor, and wherein the control unit recognizes a movement of the portable terminal using the acceleration sensor and the angular velocity sensor and changes the display location of an object on the touch screen in correspondence to the movement of the portable terminal and drives the plurality of vibrators to generate vibrations at a point corresponding to the location of the object at the same time.

9. The vibration generating apparatus of claim 3, wherein the portable terminal further comprises a memory unit configured to divide an audible frequency band into a plurality of frequency bands and store vibration forces and vibration force maintaining times of the plurality of vibrators for the divided frequency bands, and wherein the control unit analyzes a frequency component contained in an output audio signal when the audio signal is output and detects a frequency band, a vibration force, and a vibration force maintaining time corresponding to a most frequent frequency band.

10. A vibration generating method for a portable terminal comprising:
determining vibration generation patterns of a plurality of vibrators according to a vibration event; and
driving the plurality of vibrators according to the vibration generation patterns,
wherein the plurality of vibrators are mounted to the portable terminal and spaced apart from each other by a predetermined interval.

11. The vibration generating method of claim 10, wherein the portable terminal further comprises a touch screen, and wherein a control unit drives the vibrator having a first resonance frequency at a time point when a touch input is generated if the vibration event is the touch input for a key button displayed through the touch screen of the portable terminal and drives the vibrator having a second resonance frequency at a time point when the touch input is released.

12. The vibration generating method of claim 11, wherein the plurality of vibrators are driven to generate vibrations in a single vibration direction, wherein the single vibration direction is one of upward/downward and right/left directions with respect to a front surface of the portable terminal, and wherein at least one of the plurality of vibrators is mounted at left and right ends of the portable terminal respectively, or is mounted at upper and lower ends of the portable terminal respectively.

13. The vibration generating method of claim 12, wherein the control unit drives the plurality of vibrators to generate vibrations at locations corresponding to a direction in which a scroll touch for currently displayed data proceeds if the scroll touch is generated in the touch screen,
wherein if a flicking touch for currently displayed data is generated in the touch screen, the control unit drives the plurality of vibrators to generate vibrations in a direction in which the flicking touch proceeds by changing the display state of data to convert the screen in correspondence to the direction in which the flicking touch proceeds and by driving a first vibrator to generate vibrations in a direction corresponding to a location where the flicking touch starts at a time point when the screen conversion starts and driving a second vibrator to generate vibrations in a direction corresponding to a location where the flicking touch ends at a time point when the screen conversion ends.

14. The vibration generating method of claim 12, wherein when a display location of an object is changed in correspondence to the touch input with the object being displayed on the touch screen, the control unit drives the plurality of vibrators to generate vibrations in a point corresponding to the location of the object.

15. The vibration generating method of claim 12, wherein the portable terminal further comprises a memory unit configured to divide an audible frequency band into a plurality of frequency bands and store vibration forces and vibration force maintaining times of the plurality of vibrators for the divided frequency bands, and wherein the control unit analyzes a frequency component contained in an output audio signal when the audio signal is output and detects a frequency band, a vibration force, and a vibration force maintaining time corresponding to a most frequent frequency band.
